# EUROPÄISCHE PATENTANMELDUNG

(11) **EP 2 815 824 A1**
(43) Veröffentlichungstag der Anmeldung: **24.12.2014**
(21) Anmeldenummer: 13173153.1
(22) Anmeldetag: 21.06.2013
(51) Int. Cl.: B22F 3/105, B22F 5/04, B22F 5/10, B22F 7/06, F01D 5/00, F01D 5/28

(54) **Verfahren zur Herstellung einer Komponente**

(71) Anmelder: Siemens Aktiengesellschaft, 80333 München (DE)
(72) Erfinder: Lehmann, Christoph, dr., 47506 Neukirchen-Vluyn (DE); Rehnsch, Andreas, 45131 Essen (DE); Reinkensmeier, Ingo, 10559 Berlin (DE)

(57) **Zusammenfassung**

Die Erfindung betrifft ein Verfahren zur Herstellung einer Komponente, wobei als Herstellungsverfahren im Wesentlichen das Selective Laser Melting verwendet wird und darüber hinaus eine schichtweise Erzeugung der Komponente dadurch erfolgt, dass unterschiedliche pulverförmige Werkstoffe verwendet werden.

## Beschreibung

Die Erfindung betrifft ein Verfahren zur Herstellung einer Komponente, wobei die Komponente schichtweise erzeugt wird, wobei ein zu verarbeitender Werkstoff in Pulverform in einer dünnen Schicht auf eine Grundplatte aufgebracht wird, wobei der pulverförmige Werkstoff mittels einer Energiestrahlung lokal umgeschmolzen wird und nach Erstarrung eine feste Materialschicht bildet.

Bekannt ist das sogenannte selektive Laserschmelzen oder Selective Laser Melting (SLM). Solch ein Fertigungsverfahren ist ein generatives Fertigungsverfahren, das zur Gruppe der Strahlschmelzverfahren gehört. Hierbei wird Metallpulver Schicht für Schicht aufgetragen, wobei mit dem Herstellungsverfahren räumliche Geometrien entstehen können. Der Verfahrensablauf des Selective Laser Meltings erfolgt folgender Maßen. Zunächst wird ein zu verarbeitender Werkstoff in Pulverform in einer dünnen Schicht auf eine Grundplatte aufgebracht. Der pulverförmige Werkstoff wird mittels einer Energiestrahlung lokal vollständig umgeschmolzen und bildet nach der Erstarrung eine feste Metallschicht. Anschließend wird die Grundplatte um den Betrag einer Schichtdicke abgesenkt und erneut Pulver aufgetragen.
Dieser Zyklus wird solange wiederholt, bis alle Schichten umgeschmolzen sind.

Laufschaufeln in Strömungsmaschinen, wie z.B. Dampfturbinen, Verdichtern von Gasturbinen und Kompressoren von Generatoren werden maßgeblich nach der Belastung der Komponente durch Fliehkraft ausgelegt. Außerdem müssen Zusatzspannungen wie Biegespannung oder Torsionsspannung berücksichtigt werden. Der begrenzende Parameter ist die Festigkeit des angewendeten Werkstoffs an den hochbelasteten Stellen. Derzeit werden die Komponenten fertigungsbedingt aus einem Werkstoff hergestellt, der sich an der Auslastung der hochbelasteten Bereiche orientiert. Somit erzwingen lokale Spannungsspitzen die Wahl eines hochfesten und somit teureren Werkstoffs. Des Weiteren wird dadurch auch die Begrenzung der Bauteilgröße bestimmt.

In der Regel werden Laufschaufeln von Turbomaschinen aus einem vorgefertigten Stahlkörper hergestellt, was durch Schmieden oder Walzen erfolgt. Aus dem Stahlkörper wird die Kontur der Laufschaufel einschließlich Fuß und ggf. Deckplatten oder andere Kupplungselemente gefräst. Das Design von Laufschaufeln orientiert sich derzeit maßgeblich an den vorgegebenen Festigkeitswerten des angewendeten Werkstoffs. Die Auslastung, unter dem das Verhältnis örtlicher Spannung zu gegebenen Werkstofffestigkeiten zu verstehen ist, variiert über die Komponente. Begrenzend für das Design ist der Ort höchster Spannung und somit höchster Auslastung. Dadurch ist die Geometrie der Komponente durch diese Auslastung bestimmt.

Bisher wurden zur Massenreduktion bei Laufschaufeln Geometrieoptimierungen oder der Einsatz von Werkstoff mit niedrigerer Dichte wie z.B. Titan, eingesetzt. Bisher war die Erzeugung von Hohlkörpergeometrien nicht möglich.

Aufgabe der Erfindung ist es, ein verbessertes Herstellungsverfahren anzugeben, mit der geeignete Komponenten hergestellt werden können.

Gelöst wird dies durch ein Verfahren zur Herstellung einer Komponente, wobei die Komponente schichtweise erzeugt wird, wobei ein zu verarbeitender Werkstoff in Pulverform in einer dünnen Schicht auf eine Grundplatte aufgebracht wird, wobei der pulverförmige Werkstoff mittels einer Energiestrahlung lokal umgeschmolzen wird und nach Erstarrung eine feste Materialschicht bildet, wobei eine weitere dünne Schicht aus einem anderen zu verarbeitenden Werkstoff in Pulverform aufgebracht wird und mittels der Energiestrahlung lokal umgeschmolzen wird und nach Erstarrung eine feste Materialschicht bildet.

Somit wird erfindungsgemäß vorgeschlagen, dass Verfahren des Selective Laser Melting einzusetzen und durch schichtweise Erzeugung der Komponente einen Gradientenwerkstoff zu erzeugen. Hierbei wird einerseits die Zusammensetzung des Pulvergemischs, welches im weiteren Schritt durch eine Energiebestrahlung aufgeschmolzen wird, schichtweise geändert. Das Pulvergemisch kann z.B. aus Stahl, Titan, Aluminium und anderen verfügbaren metallischen Werkstoffen einzeln oder in Kombination bestehen. Somit lassen sich für verschiedene Bauteilbereiche die Festigkeitswerte des Werkstoffs der Komponente beeinflussen.

Ein Vorteil dieses Verfahrens besteht darin, das somit genutzt werden kann, hochbelastete Bereiche der Komponenten durch gezielte Erhöhung der Festigkeiten in diesem Bereich weniger stark zu beanspruchen. In niedrig belasteten Bereichen können die Festigkeiten entsprechend abgesenkt werden. Somit lassen sich durch Einsatz dieses Verfahrens spannungshomogenisierte Komponenten erzeugen. Es ist nicht mehr erforderlich, die komplette Komponente aus dem durch lokale Spannungserhöhung erforderlichen Werkstoff zu fertigen. Veränderte Geometrien, die die Festigkeitsgradienten im Bauteil berücksichtigen, sind somit realisierbar. Es lassen sich z.B. bei Laufschaufeln hochbelastete Bereiche wie der Schaufelfuß geometrisch kleiner gestalten mit gleichzeitiger lokaler gezielter Anhebung der Werkstofffestigkeit und Beibehaltung der Auslastung des lokal vorliegenden Werkstoffs. Des Weiteren können die Laufschaufeln bei gleicher Fußgeometrie entsprechend verlängert werden.

Ein weiterer Vorteil besteht darin, dass das Selective Laser Melting-Verfahren gegenüber der jetzigen Fertigung durch Fräsen eine günstigere Variante darstellt und somit zu Kostenvorteilen führt.

Vorteilhafte Weiterbildungen sind in den Unteransprüchen angegeben.

So wird in einer ersten vorteilhaften Weiterbildung die Komponente als eine Laufschaufel ausgebildet. In einer besonders vorteilhaften Weiterbildung erfolgt die Auftragung und Schmelzung derart, dass Hohlräume in der Komponente entstehen.

Somit sollen mittels des Selective Laser Melting-Verfahrens gezielt Hohlräume in die Komponente eingebracht werden, um die Masse der Komponente und entsprechend die Fliehkraftbelastung zu reduzieren. Im Falle einer Laufschaufel als Ausführungsform der Komponente soll die innere Bauteilstruktur entsprechend der vorliegenden Belastung hinsichtlich der Fliehkraft, der Biegung und der Torsion optimiert werden, z.B. durch Ausnehmungen oder durch ein Hohlprofil oder durch eine Freiformstruktur bzw. Wabenstruktur.

Im Zusammenhang mit dem Einsetzen von unterschiedlichen Werkstoffen und gleichzeitiger Einbringung von Hohlräumen lassen sich spannungshomogenisierte Komponenten erzeugen. Im Falle von Laufschaufeln lässt sich hierdurch ein neuer Designfreiraum zur Reduzierung der Fliehkraftbelastung mit diesem Verfahren nutzen.

In einer weiteren vorteilhaften Weiterbildung werden mehrere verschiedene Werkstoffe mit unterschiedlichen Dichten verwendet.

In einer vorteilhaften Weiterbildung wird als Energiestrahlung eine Laserstrahlung verwendet. In einer alternativen Ausführungsform wird als Energiestrahlung eine Elektronenstrahlung verwendet.

Die Erfindung wird nun anhand eines Ausführungsbeispiels näher erläutert (ohne Figur).

Auszugehen ist von dem selektiven Laserschmelzen, was auch Selective Laser Melting bezeichnet wird. Hierbei wird eine Komponente dadurch hergestellt, dass die Komponente schichtweise erzeugt wird. Dabei wird ein zu verarbeitender Werkstoff in Pulverform in einer dünnen Schicht auf eine Grundplatte aufgebracht. Dieser Werkstoff kann z.B. Stahl, Titan, Aluminium und andere verfügbare metallische Werkstoffe einzeln oder in Kombination sein. Dieser pulverförmige Werkstoff wird mittels einer Energiestrahlung lokal umgeschmolzen. Die Energiestrahlung kann hierbei eine Laserstrahlung oder eine Elektronenstrahlung mit entsprechender Energie sein.

Nach der Energiestrahlung, die lokal und zeitlich begrenzt durchgeführt wird, erfolgt eine Erstarrung und eine feste Materialschicht wird gebildet. In einem weiteren Verfahrensschritt wird die Grundplatte abgesenkt und eine weitere dünne Schicht aus einem anderen zu verarbeitenden Werkstoff in Pulverform aufgebracht. Dieser pulverförmige Werkstoff kann ein Stahl, Titan, Aluminium und andere verfügbare metallische Werkstoffe einzeln oder in Kombination sein.

In einem weiteren Verfahrensschritt wird mittels der Energiestrahlung das Pulver lokal umgeschmolzen. Als Energiestrahlung kann eine Laserstrahlung oder eine Elektronenstrahlung mit entsprechender Energie verwendet werden. Nach der Erstarrung bildet sich eine feste Materialschicht. Dadurch lässt sich eine Komponente aus einem Gradientenwerkstoff herstellen. Darunter ist eine Materialzusammensetzung zu verstehen, die in einer Ausrichtung eine veränderbare Dichte aufweist.

Die Komponente kann hierbei als eine Laufschaufel ausgebildet sein. Laufschaufeln unterliegen im Betrieb hohen Fliehkräften und weisen daher Bereiche mit unterschiedlichen Festigkeitsbeanspruchungen auf.

Die Auftragung und Schmelzung des pulverförmigen Werkstoffs erfolgt hierbei derart, dass Hohlräume in der Komponente entstehen. Durch das Einbringen von Hohlräumen kann die Masse insgesamt reduziert werden. Dies würde zu einer geringeren Fliehkraftbeanspruchung führen.

Die schichtweise Erstellung der Komponente erfolgt mit mehreren verschiedenen Werkstoffen, wobei die Werkstoffe unterschiedliche Dichten aufweisen.

Der vollpulverförmige Werkstoff kann hierbei in der Schicht in einer Ebene unterschiedlich zusammengesetzt sein. So ist es möglich, beispielsweise in einer Ebene ein Pulvergemisch aus Stahl oder Titan zu verteilen und in dieser Schicht mittels der Energiestrahlung zu einer Schmelzung führen.

Die verschiedenen Werkstoffe werden in übereinanderliegenden Schichten verwendet, so dass man schließlich nicht nur in einer Ebene, sondern auch in einer schichtweisen Übereinanderanordnung einen Gradientenwerkstoff erhält.

## Patentansprüche

1. Verfahren zur Herstellung einer Komponente,
wobei die Komponente schichtweise erzeugt wird,
wobei ein zu verarbeitender Werkstoff in Pulverform in einer dünnen Schicht auf eine Grundplatte aufgebracht wird,
wobei der pulverförmige Werkstoff mittels einer Energiestrahlung lokal umgeschmolzen wird und nach Erstarrung eine feste Materialschicht bildet,
wobei eine weitere dünne Schicht aus einem anderen zu verarbeitenden Werkstoff in Pulverform ausgebracht wird und mittels der Energiestrahlung lokal umgeschmolzen wird und nach Erstarrung eine feste Materialschicht bildet.

2. Verfahren nach Anspruch 1,
wobei die Komponente als eine Laufschaufel ausgebildet wird.

3. Verfahren nach Anspruch 1 oder 2,
wobei die Auftragung und Schmelzung derart erfolgt, dass Hohlräume in der Komponente entstehen.

4. Verfahren nach einem der vorhergehenden Ansprüche,
wobei mehrere verschiedene Werkstoffe mit unterschiedlichen Dichten verwendet werden.

5. Verfahren nach einem der vorhergehenden Ansprüche,
wobei die verschiedenen Werkstoffe in der Schicht in einer Ebene verwendet werden.

6. Verfahren nach einem der vorhergehenden Ansprüche,
wobei die verschiedenen Werkstoffe in übereinanderliegenden Schichten verwendet werden.

7. Verfahren nach einem der vorhergehenden Ansprüche,
wobei als Energiestrahlung eine Laserstrahlung verwendet wird.

8. Verfahren nach einem der Ansprüche 1 bis 6,
wobei als Energiestrahlung eine Elektronenstrahlung verwendet wird.
